# FASCICULE DE BREVET EUROPEEN

(11) **EP 2 463 738 B1**
(45) Date de publication et mention de la délivrance du brevet: **20.11.2013**
(21) Numéro de dépôt: 11191210.1
(22) Date de dépôt: 29.11.2011
(51) Int. Cl.: G05D 1/00, G06F 11/16, G06F 11/18

(54) **Procédé et dispositif de passivation d'ordres de guidage d'un aéronef**
Verfahren und Vorrichtung zur Passivierung von Steuerungssollwerten eines Flugzeugs
Method and device for passivating guiding commands of an aircraft

(30) Priorité: 09.12.2010 FR 1060312
(43) Date de publication de la demande: 13.06.2012
(73) Titulaire: AIRBUS OPERATIONS (SAS), 31060 Toulouse (FR)
(72) Inventeur: Potagnik, Nicolas, 31300 Toulouse (FR); Faurie, Mathieu, 31000 Toulouse (FR); Lanterna, Florent, 31300 Toulouse (FR)
(74) Mandataire: Gevers France

(56) Documents cités:
- EP-A2- 0 315 227
- US-A1- 2007 299 568
- US-B1- 6 550 018
- Section 2.2: "Modular redundancy in fault-tolerant systems" In: Christopher P. Fuhrman: "COMPARISON-BASED DIAGNOSIS IN FAULT-TOLERANT, MULTIPROCESSOR SYSTEMS", 1996, Ecole Polytechnique Fédérale de Lausanne, Lausanne, XP002657812, pages 13-15, * page 13 - page 15; figures 2.3, 2.4 *

## Description

La présente invention concerne un procédé et un dispositif de passivation d'ordres de guidage d'un aéronef, en particulier d'un avion de transport, qui est pourvu d'un système de guidage comprenant au moins un étage de calcul d'ordres de guidage. Ces ordres de guidage sont destinés à un système de commande de vol de l'aéronef.

Dans le cadre de la présente invention, on entend par passivation le fait de rechercher un ordre (ou valeur) erroné parmi une pluralité d'ordres, d'isoler le cas échéant un ordre erroné, et de transmettre uniquement un ordre valide à des systèmes utilisateurs.

On connaît :
- par le document EP - 0 315 227, un système de détection de panne et de sélection de signal, qui prévoit une redondance fonctionnelle triple, utilisant les sorties de deux canaux primaires et la sortie de filtres ;
- par un article de Christopher P. Fuhrman, intitulé « Comparison-Based Diagnosis in Fault-Tolerant, Multiprocessor Systems » qui concerne des systèmes destinés à une sélection adaptative, qui comprennent une pluralité de redondances réalisant simultanément des opérations identiques ; et
- par le document US - 6 550 018, un système de calcul hybride à redondances multiples, qui comprend des moyens de diagnostic de panne et des moyens permettant d'émettre des informations correctes en présence de plusieurs pannes.

Bien que non exclusivement, la présente invention s'applique plus particulièrement à des opérations aériennes nécessitant une garantie de performance de navigation et de guidage, et notamment à des opérations à performances de navigation requises avec autorisation requise, de type RNP AR (« Required Navigation Performance with Authorization Required » en anglais). Ces opérations RNP AR sont basées sur une navigation de surface de type RNAV (« aRea NAVigation » en anglais) et sur des opérations à performances de navigation requises de type RNP (« Required Navigation Performance » en anglais). Elles présentent la particularité de nécessiter une autorisation spéciale pour pouvoir être mises en oeuvre sur un aéronef.

La navigation de surface de type RNAV permet à un aéronef de voler de point de route (« waypoint » en anglais) en point de route, et non plus de stations sol (de moyens de radionavigation de type NAVAID) en stations sol.

On sait que le concept RNP correspond à une navigation de surface, pour laquelle sont ajoutés (à bord de l'aéronef) des moyens de surveillance et d'alerte qui permettent d'assurer que l'aéronef reste dans un couloir, dit RNP, autour d'une trajectoire de référence et qui autorisent la prise en compte de trajectoires courbes. A l'extérieur de ce couloir se trouve potentiellement du relief ou d'autres aéronefs. La performance requise pour un type d'opération RNP est définie par une valeur RNP qui représente la demi-largeur (en milles nautiques : NM) du couloir autour de la trajectoire de référence, dans lequel l'aéronef doit rester 95% du temps au cours de l'opération. Un second couloir (autour de la trajectoire de référence) de demi-largeur deux fois la valeur RNP est également défini. La probabilité que l'aéronef sorte de ce second couloir doit être inférieure à 10⁻⁷ par heure de vol.

Le concept d'opérations RNP AR est plus contraignant encore. Les procédures RNP AR sont, en effet caractérisées par :
- des valeurs RNP :
   - qui sont inférieures ou égales à 0,3NM en approche, et qui peuvent descendre jusqu'à 0,1NM ; et
   - qui sont strictement inférieures à 1NM au départ et lors d'une remise des gaz, et qui peuvent également descendre jusqu'à 0,1NM ;
- un segment d'approche finale qui peut être courbe ; et
- des obstacles (montagnes, trafic...) qui peuvent être situés à deux fois la valeur RNP par rapport à la trajectoire de référence, alors que pour les opérations RNP usuelles, une marge supplémentaire par rapport aux obstacles est prévue.

Les autorités aériennes ont défini un niveau de sécurité visé TLS (« Target Level of Safety » en anglais) de 10⁻⁷ par opération, quel que soit le type. Dans le cas des opérations RNP AR, comme les valeurs RNP peuvent descendre jusqu'à 0,1 NM et les obstacles peuvent être situés à deux fois la valeur RNP de la trajectoire de référence, cet objectif se traduit par une probabilité que l'aéronef sorte du couloir de demi-largeur D=2.RNP qui ne doit pas excéder 10⁻⁷ par procédure.

Les équipements embarqués à bord des aéronefs (système de gestion de vol, centrale inertielle, moyens d'actualisation de données GPS et moyens de guidage du pilote automatique), ainsi que l'architecture usuelle, ne permettent pas d'atteindre le niveau de sécurité visé, si on ne prévoit pas des moyens opérationnels de mitigation, notamment pour la détection et la gestion des pannes éventuelles. C'est pourquoi une autorisation spéciale est requise pour ce type d'opération, afin d'assurer que les procédures opérationnelles et l'entraînement des pilotes permettent d'atteindre le niveau de sécurité visé. De plus, comme l'équipage doit prendre en charge certaines pannes, les aéronefs ne sont aujourd'hui pas capables de garantir une valeur RNP de 0,1NM sous panne, car l'équipage n'est pas en mesure de tenir les exigences de performance en pilotage manuel.

Comme indiqué précédemment, les aéronefs actuels ne sont pas capables de garantir une valeur RNP de 0,1NM sous panne et l'équipage doit être entraîné spécialement pour voler les procédures RNP AR. L'équipage doit, en effet, être capable de détecter et traiter, de façon adéquate, les pannes qui sont susceptibles de compromettre l'opération en cours.

L'objectif pour les aéronefs futurs est d'avoir la capacité de voler les procédures RNP AR avec des valeurs RNP jusqu'à 0,1NM, et ceci sans restriction (en situation normale et en cas de panne) en départ, approche et remise de gaz. Pour cela, l'équipage ne doit plus être considéré comme le principal moyen de détection et de traitement des pannes.

Comme indiqué ci-dessus, un aéronef est généralement pourvu d'un système de guidage qui comprend au moins un étage de calcul d'ordres de guidage, qui sont destinés à un système de commande de vol de l'aéronef. Or, pour que l'aéronef ait la capacité de voler des procédures particulières et notamment des procédures RNP AR, il est nécessaire de pouvoir éliminer de la boucle de guidage une source erronée de calcul d'ordres de guidage, afin de contrer ses éventuels effets sur la trajectoire de l'aéronef. De plus, la solution mise en place doit être suffisamment réactive pour contrer l'effet d'un ordre erroné sur le guidage de l'aéronef de façon transparente et immédiate.

La présente invention a pour objet de proposer une telle solution. Elle concerne un procédé de passivation automatique des ordres de guidage d'un aéronef, en particulier d'un avion de transport, qui est pourvu d'au moins un étage de calcul d'ordres de guidage, qui sont destinés à un système de commande de vol de l'aéronef.

A cet effet, selon l'invention, ledit procédé est remarquable en ce que :
- on prévoit sur ledit étage de calcul d'ordres de guidage une architecture comprenant au moins N équipements, dont chacun est susceptible d'engendrer des ordres de guidage, N étant un entier supérieur ou égal à 3 ; et
- de façon automatique et répétitive :
   - on réalise des comparaisons entre, d'une part chacun des ordres de guidage qui sont considérés comme principaux et qui sont engendrés par au moins deux desdits équipements, et d'autre part un ordre de guidage qui est engendré par au moins un troisième équipement, qui est considéré comme auxiliaire et qui est uniquement utilisé pour les comparaisons ; et
   - on sélectionne, en fonction des résultats de ces comparaisons, l'un desdits ordres de guidage principaux, qui est transmis audit système de commande de vol de l'aéronef, comme ordre de guidage passivé.

Ainsi, grâce à l'invention, on réalise des comparaisons entre les ordres de guidage provenant d'au moins trois équipements différents, de manière à engendrer un ordre de guidage passivé, c'est-à-dire valide (ou non erroné) qui est transmis au système de commande de vol de l'aéronef. De cette manière, on est en mesure d'éliminer de la boucle de guidage une source (ou équipement de génération d'ordre de guidage) qui est défaillant (et transmet un ordre erroné ou imprécis) afin de contrer ses éventuels effets sur la trajectoire de l'aéronef. De plus, comme précisé ci-dessous, la solution mise en place est suffisamment réactive pour contrer l'effet d'un ordre erroné sur le guidage de l'aéronef de façon transparente et immédiate.

La présente invention permet, ainsi, de s'affranchir de l'impact de toute panne simple d'un étage de calcul d'ordres de guidage sur la trajectoire de l'aéronef.

De plus, selon l'invention, on sélectionne, comme ordre de guidage passivé, uniquement l'un desdits deux ordres de guidage principaux, et pas ledit ordre de guidage auxiliaire. Aussi, pour engendrer cet ordre de guidage auxiliaire, on peut prévoir un équipement qui présente une précision moindre que les équipements qui engendrent les ordres de guidage principaux, ce qui permet de simplifier la mise en oeuvre de l'invention et de réduire son coût.

Dans un premier mode de réalisation, utilisant de préférence un voteur comme précisé ci-dessous, de façon automatique et répétitive :
- on compare chacun desdits ordres de guidage principaux à l'ordre de guidage auxiliaire ; et
- on sélectionne, comme ordre de guidage passivé, l'ordre de guidage principal qui est le plus proche de l'ordre de guidage auxiliaire.

En outre, dans un second mode de réalisation, qui utilise, de préférence, au moins un élément de passivation, comme précisé ci-dessous:
- on choisit un ordre de guidage privilégié parmi lesdits ordres de guidage principaux ; et
- de façon automatique et répétitive :
   - on compare chacun desdits ordres de guidage principaux à l'ordre de guidage auxiliaire ; et
   - on sélectionne, comme ordre de guidage passivé, l'ordre de guidage privilégié tant qu'il reste le plus proche de l'ordre de guidage auxiliaire, à une valeur de tolérance près, et sinon, une valeur de passivation qui dépend de l'autre ordre de guidage principal, non privilégié.

De plus, dans ce second mode de réalisation :
- ladite valeur de passivation est égale, soit directement audit autre ordre de guidage principal, non privilégié, soit à une valeur de seuil qui est relative à ce dernier ; et/ou
- on filtre, de préférence, l'ordre de guidage passivé, afin d'obtenir une valeur continue, qui est transmise audit système de commande de vol de l'aéronef.

La présente invention concerne également un dispositif de passivation (automatique) des ordres de guidage d'un aéronef, en particulier un avion de transport, qui est pourvu d'un système de guidage comprenant au moins un étage de calcul d'ordres de guidage, qui sont destinés à un système de commande de vol de l'aéronef.

Selon l'invention, ledit dispositif du type comportant au moins un étage de calcul d'ordres de guidage, est remarquable en ce que :
- ledit étage de calcul d'ordres de guidage présente une architecture comprenant au moins N équipements, dont chacun est susceptible d'engendrer des ordres de guidage, N étant un entier supérieur ou égal à 3 ; et
- ledit dispositif comporte, de plus, des moyens de passivation qui sont formés de manière à, de façon automatique et répétitive, réaliser des comparaisons entre d'une part chacun des ordres de guidage, considérés comme principaux, qui sont engendrés par au moins deux équipements, et d'autre part un ordre de guidage engendré par au moins un troisième équipement, qui est considéré comme auxiliaire et qui est uniquement utilisé pour les comparaisons, et sélectionner, en fonction des résultats de ces comparaisons, l'un desdits ordres de guidage principaux, qui est transmis audit système de commande de vol de l'aéronef, comme ordre de guidage passivé.

L'architecture conforme à l'invention pour la détection et l'isolation de systèmes défaillants s'appuie donc sur un principe d'architecture triplex (ou à N équipements (N≥3)) et propose d'utiliser trois sources, ou plus, au moins au niveau de l'étage de calcul des ordres de guidage d'asservissement de l'aéronef sur la trajectoire, ce qui permet de détecter et d'isoler automatiquement des pannes au niveau de cet étage. De plus, cet étage peut être constitué d'équipements identiques (étage symétrique) ou d'équipements différents (étage dissymétrique).

Ainsi, le dispositif conforme à l'invention est en mesure d'éliminer une source (ou équipement de génération d'ordres de guidage) qui est défaillant (et transmet un ordre erronée ou imprécis) afin de contrer ses éventuels effets sur la trajectoire de l'aéronef. De plus, ledit dispositif est suffisamment réactif pour contrer l'effet d'un ordre erroné sur le guidage de l'aéronef de façon transparente et immédiate.

Dans un premier mode de réalisation du dispositif conforme à l'invention, lesdits moyens de passivation comportent un premier ensemble qui est muni d'un voteur et qui est formé de manière :
- à comparer chacun desdits ordres de guidage principaux à l'ordre de guidage auxiliaire ; et
- à sélectionner, comme ordre de guidage passivé, l'ordre de guidage principal qui est le plus proche de l'ordre de guidage auxiliaire.

En outre, dans un second mode de réalisation, lesdits moyens de passivation comportent un second ensemble qui est muni d'éléments de passivation et qui est formé de manière :
- à comparer à l'ordre de guidage auxiliaire, chacun desdits ordres de guidage principaux, dont un est choisi comme ordre de guidage privilégié ; et
- à sélectionner, comme ordre de guidage passivé, l'ordre de guidage privilégié tant qu'il reste le plus proche de l'ordre de guidage auxiliaire, à une valeur de tolérance près, et sinon, une valeur de passivation qui dépend de l'autre ordre de guidage principal, non privilégié.

En plus, des avantages précités, ce second mode de réalisation qui sélectionne en priorité (et tant qu'il reste le plus proche de l'ordre de guidage auxiliaire) l'ordre de guidage privilégié, utilise donc pour le guidage une source (à savoir l'équipement générant ledit ordre de guidage privilégié) qui est stable, c'est-à-dire que la source choisie ne fluctue pas en permanence.

Ceci est notamment avantageux dans les cas suivants :
- pour des opérations RNP, certains systèmes faisant partie d'une architecture RNP peuvent avoir besoin de connaître la source (ou équipement générant l'ordre de guidage) en cours d'utilisation pour le guidage, pour adapter leur fonctionnement à cette source, par exemple soit le système de gestion de vol dédié au côté pilote, soit le système de gestion de vol dédié au côté copilote ; et
- les ordres de guidage en provenance de chaque système de gestion de vol peuvent différer l'un de l'autre, en raison de l'indépendance et de l'asynchronisme que présentent les équipements associés. De ce fait, le basculement d'une source à une autre peut introduire des effets indésirables dans les boucles de guidage. Aussi, il est préférable que la source utilisée soit stable.

La présente invention concerne également :
- un système de guidage qui comporte un dispositif tel que celui précité ; et/ou
- un aéronef, en particulier un avion de transport, qui est muni d'un tel système de guidage ou d'un tel dispositif.

Les figures du dessin annexé feront bien comprendre comment l'invention peut être réalisée. Sur ces figures, des références identiques désignent des éléments semblables.

La figure 1 est le schéma synoptique d'un dispositif conforme à l'invention.

La figure 2 et 4 sont les schémas synoptiques de deux modes de réalisation différents de moyens de passivation d'un dispositif conforme à l'invention.

Les figures 3, 5 et 6 sont des graphiques permettant de mettre en évidence le fonctionnement respectivement de modes de réalisation différents d'un dispositif conforme à l'invention.

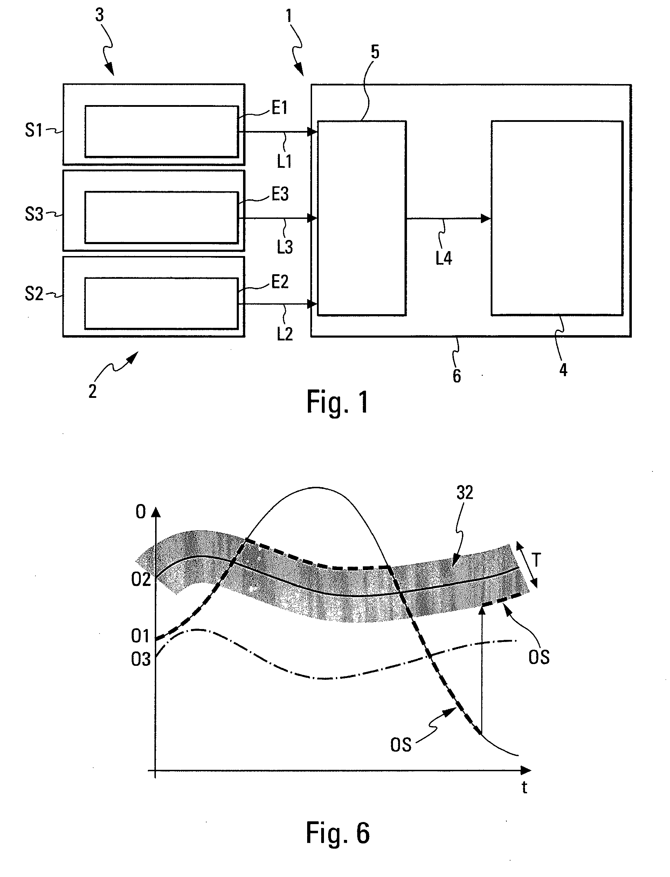

Le dispositif 1 conforme à l'invention et représenté schématiquement sur la figure 1 est un dispositif de passivation automatique des ordres de guidage d'un aéronef (non représenté), en particulier d'un avion de transport. On entend par passivation le fait de rechercher un ordre (ou valeur) erroné parmi une pluralité d'ordres, d'isoler tout ordre erroné trouvé, et de transmettre un ordre valide à des systèmes utilisateurs.

Ce dispositif 1 qui est embarqué sur l'aéronef, comprend au moins un étage 3 de calcul d'ordres de guidage, qui sont destinés à un système usuel 4 de commande de vol de l'aéronef, comme représenté schématiquement sur la figure 1. Ce dispositif 1 peut, en particulier, être utilisé afin d'aider à la conduite d'opérations aériennes nécessitant une garantie de performance de navigation et de guidage, et notamment des opérations RNP AR.

Ce dispositif de passivation 1 fait partie d'un système de guidage 2 de l'aéronef. On sait que, généralement, un système de guidage 2 comprend, en plus dudit étage 3 de calcul d'ordres de guidage de l'aéronef, au moins les étages successifs suivants (non représentés) :
- un étage de calcul de la position de l'aéronef ;
- un étage de gestion du plan de vol de l'aéronef ;
- un étage de calcul de la trajectoire de l'aéronef ; et
- un étage de calcul de déviations.

Dans un mode de réalisation particulier, non représenté, sur un tel système de guidage 2 :
- ledit étage de calcul de la position de l'aéronef peut être mis en oeuvre dans des systèmes de références inertielles et anémobarométriques, de type ADIRS (« Air Data and Inertial Reference System » en anglais). De façon usuelle, ces systèmes de type ADIRS calculent la position de l'aéronef à partir de données provenant de systèmes de réception de signaux (par exemple des récepteurs multimode MMR pour « Multi-Mode Receiver »), notamment des signaux GNSS (« Global Navigation Satellite System » en anglais) ;
- lesdits étages de gestion du plan de vol, de calcul de la trajectoire et de calcul des déviations peuvent être mis en oeuvre dans des systèmes de gestion de vol, de type FMS (« Flight Management System » en anglais). De façon usuelle, ces systèmes gèrent le plan de vol à partir de données provenant d'une base de données de navigation (non représentée) et de données entrées par le pilote, construisent la trajectoire de référence, et calculent les déviations entre la position de l'aéronef et cette trajectoire de référence ; et

- ledit étage de calcul d'ordres de guidage peut être mis en oeuvre (au moins en partie) dans des systèmes de gestion de vol, de type FMS, et/ou dans des systèmes de guidage et de contrôle de vol, de type FCGS (« Flight Control and Guidance System » en anglais). De façon usuelle, ces derniers systèmes assurent le guidage de l'aéronef.

Selon l'invention, et comme représenté sur la figure 1 :
- ledit étage 3 de calcul d'ordres de guidage présente une architecture comprenant au moins N équipements E1, E2, E3, dont chacun est susceptible d'engendrer des ordres de guidage, N étant un entier supérieur ou égal à 3. L'introduction de cette redondance permet de produire plusieurs ordres de guidage comparables ; et
- ledit dispositif 1 comporte, de plus, des moyens de passivation 5 qui comprennent des moyens intégrés (non représentés spécifiquement sur la figure 1) formés de manière à, de façon automatique et répétitive :
   - réaliser des comparaisons entre les ordres de guidage engendrés par au moins deux équipements (E1 et E2 par exemple), qui sont considérés comme principaux, et un ordre de guidage engendré par au moins un troisième équipement (E3 par exemple), qui est considéré comme auxiliaire et qui est uniquement utilisé pour les comparaisons. Lesdits ordres de guidage sont reçus desdits équipements E1 à E3 respectivement par l'intermédiaire de liaisons L1 à L3 ;
   - sélectionner, en fonction des résultats de ces comparaisons, l'un desdits ordres de guidage principaux, comme ordre de guidage passivé ; et
   - transmettre l'ordre de guidage passivé ainsi sélectionné audit système 4 de commande de vol, par l'intermédiaire d'une liaison L4.

L'architecture conforme à l'invention pour la détection et l'isolation d'équipements ou de systèmes défaillants s'appuie donc sur un principe d'architecture triplex (ou à N équipements (N≥3)) et propose d'utiliser trois sources (équipements E1 à E3), ou plus, au moins au niveau de l'étage 3 de calcul des ordres de guidage d'asservissement de l'aéronef sur la trajectoire, ce qui permet de détecter et d'isoler automatiquement des pannes au niveau de cet étage 3. De plus, cet étage 3 peut être constitué d'équipements identiques (étage symétrique) ou d'équipements différents (étage dissymétrique).

Dans un mode de réalisation préféré non représenté, chacun des étages précités du système de guidage 2 présente une telle architecture comprenant au moins N équipements.

Ainsi, le dispositif 1 conforme à l'invention réalise des comparaisons entre les ordres de guidage provenant d'au moins trois équipements E1 à E3 différents, de manière à engendrer un ordre de guidage passivé, c'est-à-dire valide (ou non erroné) qui est transmis au système 4 de commande de vol de l'aéronef. De ce fait, ledit dispositif 1 est en mesure d'éliminer de la boucle de guidage une source (ou équipement de génération d'ordre de guidage) qui est défaillant (et transmet un ordre erroné ou imprécis) afin notamment de contrer ses éventuels effets sur la trajectoire de l'aéronef. De plus, comme précisé ci-dessous, la solution mise en place est suffisamment réactive pour contrer l'effet d'un ordre erroné sur le guidage de l'aéronef de façon transparente et immédiate.

La présente invention permet ainsi de s'affranchir de l'impact de toute panne simple de l'étage 3 de calcul d'ordres de guidage sur la trajectoire de l'aéronef.

De plus, selon l'invention, les moyens de passivation 5 sélectionnent, comme ordre de guidage passivé, uniquement l'un desdits deux ordres de guidage principaux, et pas ledit ordre de guidage auxiliaire. Aussi, pour engendrer cet ordre de guidage auxiliaire, on peut prévoir un équipement E3 qui présente une précision moindre que les équipements E1 et E2 qui génèrent les ordres de guidage principaux, ce qui permet de simplifier la mise en oeuvre de l'invention et de réduire son coût.

Lesdits moyens de passivation 5 ont donc pour objectif de comparer les ordres en provenance de chaque chaîne de guidage et d'isoler les valeurs défectueuses. Ils transmettent ensuite un ordre valide aux boucles d'asservissement du système 4 de commande de vol de l'aéronef.

Dans un mode de réalisation particulier représenté sur la figure 1 :
- lesdits équipements E1, E2, E3 sont intégrés, chacun, dans un système S1, S2, S3 de gestion de vol, de type FMS (« Flight Management System » en anglais). Le calcul des ordres de guidage est réalisé, de façon usuelle, à partir d'informations associées au plan de vol et à de données de l'aéronef, par chacun desdits équipements E1, E2, et E3 ; et
- lesdits moyens de passivation 5, ainsi qu'au moins une partie du système 4 de commande de vol, sont intégrés dans au moins un système 6 de guidage et de contrôle de vol, de type FCGS (« Flight Control and Guidance System » en anglais).

Dans un mode de réalisation particulier, les systèmes FMS et FCGS répondent à une ségrégation usuelle au niveau du poste de pilotage entre le côté pilote et le côté copilote. A titre d'illustration, dans ce cas :
- le système S1 peut être associé au côté pilote ;
- le système S2 peut être associé au côté copilote, lesdits systèmes S1 et S2 étant englobés sous l'appellation FMS frontaux et les opérations qu'ils effectuent étant directement observables par l'équipage ; et
- le système S3 n'est pas affecté à un côté particulier du poste de pilotage. Il s'agit d'une troisième source de calcul utilisée pour atteindre le niveau de redondance minimal requis de trois équipements.

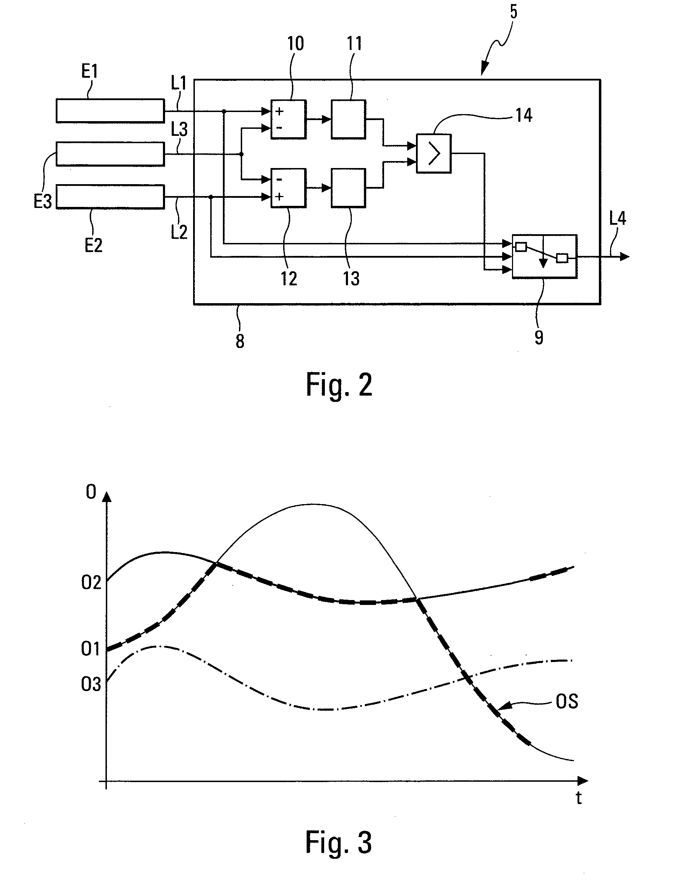

Dans un premier mode de réalisation (représenté sur la figure 2), lesdits moyens de passivation 5 comportent un ensemble 8 qui est muni d'un commutateur usuel 9 et qui est formé de manière :
- à comparer chacun desdits ordres de guidage principaux (reçus respectivement des équipements E1 et E2) à l'ordre de guidage auxiliaire (reçu de l'équipement E3) ; et
- à sélectionner, comme ordre de guidage passivé, l'ordre de guidage principal qui est le plus proche de cet ordre de guidage auxiliaire.

Le principe d'un commutateur 9 est de transmettre à sa sortie la valeur médiane entre les données (en l'occurrence les ordres de guidage) entrées.

Comme représenté sur la figure 2, ledit ensemble 8 comporte :
- un moyen de calcul 10 qui calcule la différence entre l'ordre de guidage principal reçu de l'équipement E1 et l'ordre de guidage auxiliaire reçu de l'équipement E3 ;
- un moyen de calcul 11 qui détermine la valeur absolue de la différence calculée par le moyen de calcul 10 ;
- un moyen de calcul 12 qui calcule la différence entre l'ordre de guidage principal reçu de l'équipement E2 et l'ordre de guidage auxiliaire reçu de l'équipement E3 ;
- un moyen de calcul 13 qui détermine la valeur absolue de la différence calculée par le moyen de calcul 12 ;
- un moyen de calcul 14 qui compare, entre eux, les résultats reçus des moyens de calcul 11 et 13 et qui transmet au commutateur 9 l'ordre de guidage principal pour lequel la valeur absolue de la différence correspondante est la plus faible, c'est-à-dire celui qui est le plus proche de l'ordre de guidage auxiliaire ; et
- ledit commutateur 9 qui transmet, via la liaison L4, la valeur médiane entre les ordres de guidage principaux (reçus respectivement des équipements E1 et E2) et l'ordre de guidage principal reçu du moyen de calcul 14.

Le chronogramme de la figure 3 permet d'illustrer le fonctionnement du mode de réalisation de la figure 2. Sur cette figure 3, sur laquelle on a représenté les valeurs O des ordres de guidage en fonction du temps t :
- l'ordre de guidage principal, reçu de l'équipement E1, est représenté par une courbe O1 en trait continu fin ;
- l'ordre de guidage principal, reçu de l'équipement E2, est représenté par une courbe 02 en trait continu épais ;
- l'ordre de guidage auxiliaire, reçu de l'équipement E3, est représenté par une courbe 03 en trait mixte ; et
- l'ordre de guidage passivé, qui est généré par l'ensemble 8 et qui est transmis au système 4 de commande de vol, est représenté par une courbe OS en tirets épais.

L'ensemble 8 sélectionne donc, comme ordre de guidage passivé, l'ordre de guidage principal qui est le plus proche de l'ordre de guidage auxiliaire. Ce dernier (reçu de l'équipement E3) n'est donc jamais sélectionné comme source de guidage. Aussi, pour engendrer cet ordre de guidage auxiliaire, on peut prévoir un équipement E3 qui présente une précision moindre que les équipements E1 et E2 qui engendrent les ordres de guidage principaux.

Ce premier mode de réalisation présente également les avantages suivants :
- aucun réglage n'est nécessaire ; et
- on obtient une réponse rapide pour la détection des cas de panne.

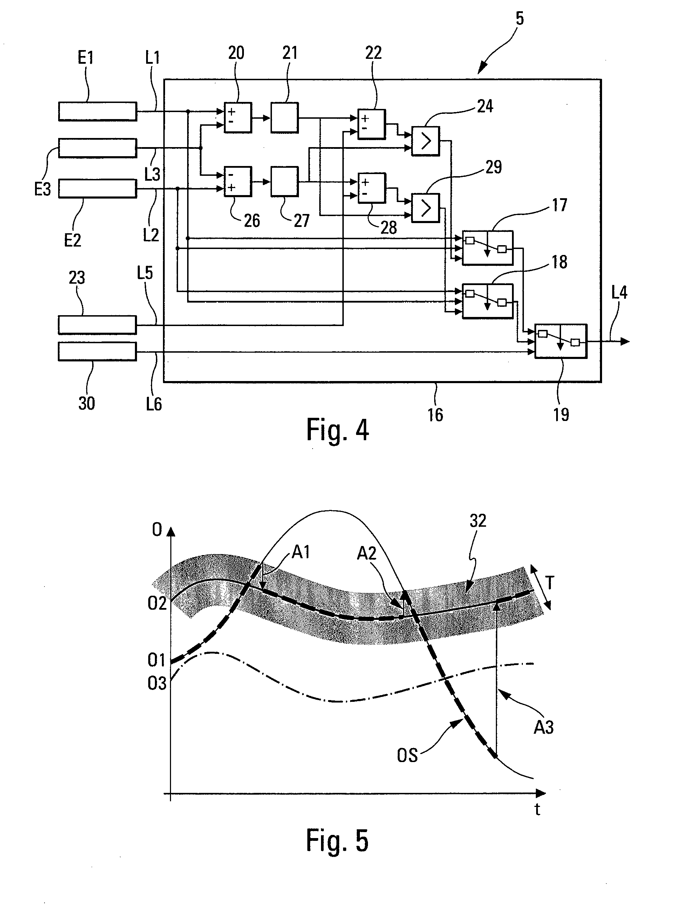

Par ailleurs, dans un second mode de réalisation (représenté sur la figure 4), lesdits moyens de passivation 5 comportent un ensemble 16 qui est muni d'éléments de commutation 17, 18, et 19 et qui est formé de manière :
- à comparer, à l'ordre de guidage auxiliaire (reçu de l'équipement E3), chacun desdits ordres de guidage principaux (reçus respectivement des équipements E1 et E2), dont un est choisi comme ordre de guidage privilégié ; et
- à sélectionner, comme ordre de guidage passivé, l'ordre de guidage privilégié tant qu'il reste le plus proche de l'ordre de guidage auxiliaire, à une valeur de tolérance près, et sinon, une valeur de passivation qui dépend de l'autre ordre de guidage principal, non privilégié.

Le principe d'un élément de commutation 17, 18, et 19 est de privilégier l'une de ses entrées (en l'occurrence l'ordre de guidage privilégié), et de ne basculer sur une autres source que si la tolérance associée est dépassée.

Comme représenté sur la figure 4 , ledit ensemble 16 comporte :
- un moyen de calcul 20 qui calcule la différence entre l'ordre de guidage principal reçu de l'équipement E1, qui est par exemple considéré comme ordre de guidage privilégié, et l'ordre de guidage auxiliaire reçu de l'équipement E3 ;
- un moyen de calcul 21 qui détermine la valeur absolue de la différence calculée par le moyen de calcul 20 ;
- un moyen de calcul 22 qui calcule la différence entre la valeur absolue reçu du moyen de calcul 21 et une valeur de tolérance T0 reçue d'un moyen 23 (via une liaison L5) ;
- un moyen de calcul 24 qui compare, entre eux, les résultats reçus des moyens de calcul 22 et 27 et qui transmettent à l'élément de commutation 17 l'ordre de guidage principal pour lequel le résultat comparé est le plus faible ;
- des moyens de calcul 26 à 29 qui sont similaires, respectivement, aux moyens de calcul 20 à 24 et qui réalisent pour l'ordre de guidage principal reçu de l'équipement E2 des traitements similaires que ceux réalisés par ces derniers pour l'ordre de guidage principal reçu de l'équipement E1 ;
- l'élément de commutation 17 qui reçoit, à ses entrées, les sorties des équipements E1 et E2 et du moyen de calcul 24 ;
- l'élément de commutation 18 qui reçoit, à ses entrées, les sorties des équipements E1 et E2 et du moyen de calcul 29 ; et
- l'élément de commutation 19 qui reçoit, à ses entrées, les sorties des éléments de passivation 17 et 18 et d'un moyen 30 d'inversion de source prioritaire (via une liaison L6), et qui est relié à sa sortie à la liaison L4.

Le chronogramme de la figure 5 permet d'illustrer le fonctionnement du mode de réalisation de la figure 4. Sur cette figure 5, sur laquelle on a représenté les valeurs 0 des ordres de guidage en fonction du temps t :
- l'ordre de guidage principal, reçu de l'équipement E1 est représenté par une courbe O1 en trait continu fin ;
- l'ordre de guidage principal, reçu de l'équipement E2, est représenté par une courbe 02 en trait continu épais ;
- l'ordre de guidage auxiliaire, reçu de l'équipement E3, est représenté par une courbe 03 en trait mixte ;
- l'ordre de guidage passivé, qui est généré par l'ensemble 16 et qui est transmis au système 4 de commande de vol, est représenté par une courbe OS en tirets épais ; et
- une zone de tolérance, de part et d'autre de la courbe 02, de largeur T (T=2.T0), est mise en évidence par une zone grisée 32.

Le principe de cette seconde solution reprend les caractéristiques de fonctionnement d'un passiveur avec une utilisation de la troisième source comme moyen de comparaison.

L'ensemble 16 sélectionne donc, comme ordre de guidage passivé, en priorité un ordre de guidage privilégié qui peut être choisi à l'aide des moyens 30.

En contexte RNP, la source privilégiée est choisie parmi les côtés pilote et copilote du poste de pilotage. En pratique, le côté prioritaire est celui qui sert de référence pour guider l'aéronef (choix effectué par l'équipage). La source privilégiée est donc le système S1 ou le système S2. Si le côté pilote est choisi par l'équipage pour guider l'aéronef, les ordres utilisés proviennent du système S1 tant que celui-ci ne s'écarte pas de manière significative des ordres de guidage produits par les systèmes S2 et S3. Si le système S1 sort des tolérances, seul le système S2 est utilisé pour poursuivre le guidage.

Ce second mode de réalisation qui sélectionne en priorité l'ordre de guidage privilégié, utilise donc pour le guidage une source (à savoir l'équipement générant ledit ordre de guidage privilégié) qui est stable, c'est-à-dire que la source choisie ne fluctue pas en permanence. Ceci est notamment avantageux dans les cas suivants :
- pour des opérations RNP, certains systèmes faisant partie d'une architecture RNP peuvent avoir besoin de connaître la source (ou équipement générant l'ordre de guidage) en cours d'utilisation pour le guidage, pour adapter leur fonctionnement à cette source ; et
- les ordres de guidage en provenance de chaque système de gestion de vol peuvent différer l'un de l'autre, en raison de l'indépendance et de l'asynchronisme que présentent les équipements associés. De ce fait, le basculement d'une source à une autre peut introduire des effets indésirables dans les boucles de guidage. Aussi, il est préférable que la source utilisée soit stable.

Ce second mode de réalisation permet donc de guider de façon stable sur les FMS frontaux avec un niveau de réactivité satisfaisant.

Ce second mode de réalisation présente des sauts de ses valeurs de sortie lors des phases de transitions, comme illustré par des flèches A1, A2, et A3 sur la figure 5. Pour remédier au moins en partie à cet inconvénient, le dispositif 1 peut comporter, dans un mode de réalisation particulier, au moins un filtre (non représenté) pour filtrer l'ordre de guidage passivé, afin d'obtenir une valeur continue, qui est transmise audit système 4 de commande de vol de l'aéronef.

Lors de la transition sur la source de donnée secondaire, la valeur de sortie des moyens de passivation 5 est la valeur exacte de cette source de donnée secondaire. Il est possible de prévoir une variante de cette solution, selon laquelle lors de la commutation sur la source de donnée secondaire, la sortie est pondérée par les limites du seuil 32, comme le montre la figure 6.

Les principes des ensembles 8 et 16 ont été décrits par le biais d'une représentation symbolique formelle telle qu'on peut la retrouver via des langages tels que SCADE (Esterel Technologies) ou Simulink (The MathWorks Inc.). Diverses autres représentations auraient pu être employées pour décrire ces principes allant d'une description algorithmique schématique ou textuelle à l'emploi de langages de programmation tels que C, ADA, ...

La présente invention a donc pour objet de générer un signal de sortie en exploitant :
- les caractéristiques intrinsèques d'un voteur ou d'un élément de passivation ; et
- au moins trois sources d'informations différentes, dont l'une n'est utilisée que comme moyen de comparaison.

On notera que, de façon alternative, l'architecture triplex décrite dans les modes de réalisation particuliers précités, peut être remplacée par un nombre de redondances plus important pour chacun des contributeurs de la fonction.

## Revendications

1. Procédé de passivation des ordres de guidage d'un aéronef qui est pourvu d'au moins un étage (3) de calcul d'ordres de guidage, qui sont destinés à un système (4) de commande de vol de l'aéronef,
**caractérisé en ce que** :
- on prévoit sur ledit étage (3) de calcul d'ordres de guidage une architecture comprenant au moins N équipements (E1, E2, E3), dont chacun est susceptible d'engendrer des ordres de guidage, N étant un entier supérieur ou égal à 3 ; et
- de façon automatique et répétitive :
• on réalise des comparaisons entre d'une part chacun des ordres de guidage qui sont engendrés respectivement par au moins deux (E1, E2) desdits équipements et qui sont considérés comme principaux, et d'autre part un ordre de guidage qui est engendré par au moins un troisième équipement (E3), qui est considéré comme auxiliaire et qui est uniquement utilisé pour les comparaisons ; et
• on sélectionne, en fonction des résultats de ces comparaisons, l'un desdits ordres de guidage principaux, qui est transmis audit système (4) de commande de vol de l'aéronef, comme ordre de guidage passivé.

2. Procédé selon la revendication 1,
**caractérisé en ce que**, de façon automatique et répétitive :
- on compare chacun desdits ordres de guidage principaux à l'ordre de guidage auxiliaire ; et
- on sélectionne, comme ordre de guidage passivé, l'ordre de guidage principal qui est le plus proche dudit ordre de guidage auxiliaire.

3. Procédé selon la revendication 1,
**caractérisé en ce que** :
- on choisit un ordre de guidage privilégié parmi lesdits ordres de guidage principaux ; et
- de façon automatique et répétitive :
• on compare chacun desdits ordres de guidage principaux à l'ordre de guidage auxiliaire ; et
• on sélectionne, comme ordre de guidage passivé, l'ordre de guidage privilégié tant qu'il reste le plus proche de l'ordre de guidage auxiliaire, à une valeur de tolérance près, et sinon, une valeur de passivation qui dépend de l'autre ordre de guidage principal, non privilégié.

4. Procédé selon la revendication 3,
**caractérisé en ce que** ladite valeur de passivation est égale audit autre ordre de guidage principal, non privilégié.

5. Procédé selon la revendication 3,
**caractérisé en ce que** ladite valeur de passivation est égale à une valeur de seuil relative audit autre ordre de guidage principal, non privilégié.

6. Procédé selon l'une quelconque des revendications 2 à 5, **caractérisé en ce que** l'on filtre l'ordre de guidage passivé, afin d'obtenir une valeur continue, qui est transmise audit système (4) de commande de vol de l'aéronef.

7. Dispositif de passivation d'ordres de guidage d'un aéronef, ledit dispositif (1) comportant au moins un étage (3) de calcul d'ordres de guidage, qui sont destinés à un système (4) de commande de vol de l'aéronef,
**caractérisé en ce que** :
- ledit étage (3) de calcul d'ordres de guidage présente une architecture comprenant, au moins N équipements (E1, E2, E3), dont chacun est susceptible d'engendrer des ordres de guidage, N étant un entier supérieur ou égal à 3 ; et
- ledit dispositif (1) comporte, de plus, des moyens de passivation (5) qui sont formés de manière à, de façon automatique et répétitive, réaliser des comparaisons entre, d'une part, chacun des ordres de guidage qui sont engendrés respectivement par au moins deux équipements (E1, E2) et qui sont considérés comme principaux, et d'autre part, un ordre de guidage engendré par au moins un troisième équipement (E3), qui est considéré comme auxiliaire et qui est uniquement utilisé pour les comparaisons, et sélectionner, en fonction des résultats de ces comparaisons, l'un desdits ordres de guidage principaux, qui est transmis audit système (4) de commande de vol de l'aéronef, comme ordre de guidage passivé.

8. Dispositif selon la revendication 7,
**caractérisé en ce que** lesdits moyens de passivation (5) comportent un premier ensemble (8) qui est muni d'un voteur (9) et qui est formé de manière :
- à comparer chacun desdits ordres de guidage principaux à l'ordre de guidage auxiliaire ; et
- à sélectionner, comme ordre de guidage passivé, l'ordre de guidage principal qui est le plus proche de l'ordre de guidage auxiliaire.

9. Dispositif selon la revendication 7,
**caractérisé en ce que** lesdits moyens de passivation (5) comportent un second ensemble (16) qui est muni d'au moins un élément de passivation (17, 18, 19) et qui est formé de manière :
- à comparer à l'ordre de guidage auxiliaire, chacun desdits ordres de guidage principaux, dont un est choisi comme ordre de guidage privilégié ; et
- à sélectionner, comme ordre de guidage passivé, l'ordre de guidage privilégié tant qu'il reste le plus proche de l'ordre de guidage auxiliaire, à une valeur de tolérance près, et sinon, une valeur de passivation qui dépend de l'autre ordre de guidage principal, non privilégié.

10. Dispositif selon la revendication 9,
**caractérisé en ce qu'**il comporte, de plus, au moins un filtre pour filtrer l'ordre de guidage passivé, afin d'obtenir une valeur continue qui est transmise au système (4) de commande de vol.

11. Système de guidage d'un aéronef, ledit système de guidage (2) comportant au moins un étage (3) de calcul d'ordres de guidage, qui sont destinés à un système (4) de commande de vol de l'aéronef,
**caractérisé en ce qu'**il comporte, de plus, un dispositif (1) de passivation d'ordres de guidage, tel que celui spécifié sous l'une quelconque des revendications 7 à 10.

12. Aéronef,
**caractérisé en ce qu'**il comporte un dispositif (1) tel que celui spécifié sous l'une quelconque des revendications 7 à 10.

13. Aéronef,
**caractérisé en ce qu'**il comporte un système de guidage (2) tel que celui spécifié sous la revendication 11.

## Patentansprüche

1. Verfahren zur Passivierung von Lenkbefehlen für ein Luftfahrzeug, das mit mindestens einer Stufe (3) zur Berechnung von Lenkbefehlen versehen ist, die für ein Flugsteuerungssystem (4) des Luftfahrzeugs bestimmt sind,
**dadurch gekennzeichnet, dass**:
- an der Stufe (3) zur Berechnung von Lenkbefehlen eine Architektur vorgesehen wird, die mindestens N Einrichtungen (E1, E2, E3) umfasst, von denen jede in der Lage ist, Lenkbefehle zu erzeugen, wobei N eine ganze Zahl größer als oder gleich 3 ist; und
- automatisch und wiederholend:
- Vergleiche angestellt werden zwischen einerseits jedem der Lenkbefehle, die jeweils von mindestens zwei (E1, E2) der Einrichtungen erzeugt werden und als Hauptlenkbefehle betrachtet werden, und andererseits einem Lenkbefehl, der von mindestens einer dritten Einrichtung (E3) erzeugt wird, der als Hilfslenkbefehl betrachtet und ausschließlich für die Vergleiche verwendet wird; und
- abhängig von den Ergebnissen dieser Vergleiche einer der Hauptlenkbefehle, der an das Flugsteuerungssystem (4) des Luftfahrzeugs übertragen wird, als passivierter Lenkbefehl ausgewählt wird.

2. Verfahren nach Anspruch 1,
**dadurch gekennzeichnet, dass**, automatisch und wiederholend:
- jeder der Hauptlenkbefehle mit dem Hilfslenkbefehl verglichen wird; und
- als passivierter Lenkbefehl der Hauptlenkbefehl ausgewählt wird, der dem Hilfslenkbefehl am nächsten ist.

3. Verfahren nach Anspruch 1,
**dadurch gekennzeichnet, dass**:
- ein bevorzugter Lenkbefehl unter den Hauptlenkbefehlen gewählt wird; und
- automatisch und wiederholend:
- jeder der Hauptlenkbefehle mit dem Hilfslenkbefehl verglichen wird; und
- als passivierter Lenkbefehl der bevorzugte Lenkbefehl ausgewählt wird, solange er dem Hilfslenkbefehl, innerhalb eines Toleranzwerts, am nächsten bleibt, und ansonsten ein Passivierungswert, der von dem anderen, nicht bevorzugten, Hauptlenkbefehl abhängt.

4. Verfahren nach Anspruch 3,
**dadurch gekennzeichnet, dass** der Passivierungswert dem anderen, nicht bevorzugten, Hauptlenkbefehl entspricht.

5. Verfahren nach Anspruch 3,
**dadurch gekennzeichnet, dass** der Passivierungswert einem auf den anderen, nicht bevorzugten, Hauptlenkbefehl bezogenen Schwellenwert entspricht.

6. Verfahren nach einem der vorhergehenden Ansprüche 2 bis 5,
**dadurch gekennzeichnet, dass** der passivierte Lenkbefehl gefiltert wird, um einen kontinuierlichen Wert zu erhalten, der an das Flugsteuerungssystem (4) des Luftfahrzeugs übertragen wird.

7. Vorrichtung zur Passivierung von Lenkbefehlen für ein Luftfahrzeug, wobei die Vorrichtung (1) mindestens eine Stufe (3) zur Berechnung von Lenkbefehlen aufweist, die für ein Flugsteuerungssystem (4) des Luftfahrzeugs bestimmt sind,
**dadurch gekennzeichnet, dass**:
- die Stufe (3) zur Berechnung von Lenkbefehlen eine Architektur aufweist, die mindestens N Einrichtungen (E1, E2, E3) umfasst, von denen jede in der Lage ist, Lenkbefehle zu erzeugen, wobei N eine ganze Zahl größer als oder gleich 3 ist; und
- die Vorrichtung (1) ferner Passivierungsmittel (5) aufweist, die so ausgebildet sind, dass sie, automatisch und wiederholend, Vergleiche anstellen zwischen einerseits jedem der Lenkbefehle, die jeweils von mindestens zwei Einrichtungen (E1, E2) erzeugt und als Hauptlenkbefehle betrachtet werden, und andererseits einem Lenkbefehl, der von mindestens einer dritten Einrichtung (E3) erzeugt wird, der als Hilfslenkbefehl betrachtet und ausschließlich für die Vergleiche verwendet wird, und abhängig von den Ergebnissen dieser Vergleiche einen der Hauptlenkbefehle, der an das Flugsteuerungssystem (4) des Luftfahrzeugs übertragen wird, als passivierten Lenkbefehl auswählen.

8. Vorrichtung nach Anspruch 7,
**dadurch gekennzeichnet, dass** die Passivierungsmittel (5) eine erste Einheit (8) aufweisen, die mit einem Voter (9) versehen und so ausgebildet ist, dass sie:
- jeden der Hauptlenkbefehle mit dem Hilfslenkbefehl vergleicht; und
- als passivierten Lenkbefehl den Hauptlenkbefehl auswählt, der dem Hilfslenkbefehl am nächsten ist.

9. Vorrichtung nach Anspruch 7,
**dadurch gekennzeichnet, dass** die Passivierungsmittel (5) eine zweite Einheit (16) aufweisen, die mit mindestens einem Passivierungselement (17, 18, 19) versehen und so ausgebildet ist, dass sie:
- mit dem Hilfslenkbefehl jeden der Hauptlenkbefehle vergleicht, wovon einer als bevorzugter Lenkbefehl ausgewählt ist; und
- als passivierten Lenkbefehl den bevorzugten Lenkbefehl auswählt, solange er dem Hilfslenkbefehl, innerhalb eines Toleranzwerts, am nächsten bleibt, und ansonsten einen Passivierungswert, der von dem anderen, nicht bevorzugten, Hauptlenkbefehl abhängt.

10. Vorrichtung nach Anspruch 9,
**dadurch gekennzeichnet, dass** sie ferner mindestens einen Filter aufweist, um den passivierten Lenkbefehl zu filtern, um einen kontinuierlichen Wert zu erhalten, der an das Flugsteuerungssystem (4) übertragen wird.

11. Lenksystem eines Luftfahrzeugs, wobei das Lenksystem (2) mindestens eine Stufe (3) zur Berechnung von Lenkbefehlen aufweist, die für ein Flugsteuerungssystem (4) des Luftfahrzeugs bestimmt sind,
**dadurch gekennzeichnet, dass** es ferner eine Vorrichtung (1) zur Passivierung von Lenkbefehlen wie die nach einem der Ansprüche 7 bis 10 aufweist.

12. Luftfahrzeug,
**dadurch gekennzeichnet, dass** es eine Vorrichtung (1) wie die nach einem der Ansprüche 7 bis 10 aufweist.

13. Luftfahrzeug,
**dadurch gekennzeichnet, dass** es ein Lenksystem (2) wie das nach Anspruch 11 aufweist.

## Claims

1. A passivation method for guidance orders in an aircraft being provided with at least one calculation stage (3) for guidance orders, being intended to a flight control system (4) of the aircraft, **characterized in that**:
- on said calculation stage (3) for guidance orders an architecture is provided comprising at least N pieces of equipment (E1, E2, E3), each of which is able to generate guidance orders, N being an integer higher than or equal to 3; and
- automatically and repeatedly:
• comparisons are made between, on the one hand each of the guidance orders which are generated respectively by at least two (E1, E2) of said pieces of equipment and being considered as main ones, and on the other hand a guidance order being generated by at least one third piece of equipment (E3), being considered as auxiliary and being only used for comparisons; and
• as a function of results of these comparisons, one of said main guidance orders is selected, being transmitted to said flight control system (4) of the aircraft, as a passivated guidance order.

2. The method according to claim 1,
**characterized in that** automatically and repeatedly:
- each one of said main guidance orders is compared with the auxiliary guidance order; and
- as a passivated guidance order, the main guidance order is selected being the closest to the auxiliary guidance order.

3. The method according to claim 1,
**characterized in that**:
- a privileged guidance order is selected amongst said main guidance orders; and
- automatically and repeatedly:
• each one of said main guidance orders is compared with the auxiliary guidance order; and
• as a passivated guidance order, the privileged guidance order is selected as long as it remains the closest to the auxiliary guidance order, within one tolerance value, and otherwise, a passivation value depending on the other main, not privileged, guidance order.

4. The method according to claim 3,
**characterized in that** said passivation value is equal to said other main, not privileged, guidance order.

5. The method according to claim 3,
**characterized in that** said passivation value is equal to a threshold value relative to said other main, not privileged, guidance order.

6. The method according to any one of claims 2 to 5,
**characterized in that** the passivated guidance order is filtered, so as to obtain a continuous value, being transmitted to said flight control system (4) of the aircraft.

7. A passivation device for guidance orders of an aircraft, said device (1) comprising at least one calculation stage (3) for guidance orders, being intended to a flight control system (4) of the aircraft,
**characterized in that**:
- said calculation stage (3) for guidance orders has an architecture comprising at least N pieces of equipment (E1, E2, E3), each of which is able to generate guidance orders, N being an integer higher than or equal to 3; and
- said device (1) further comprises passivation means (5) being formed so as to, automatically and repeatedly, make comparisons between on the one hand each of the guidance orders which are generated respectively by at least two pieces of equipment (E1, E2) being considered as main ones, and on the other hand a guidance order generated by at least one third piece of equipment (E3), being considered as auxiliary and being only used for comparisons, and select as a function of results of those comparisons one of said main guidance orders being transmitted to said flight control system (4) of the aircraft, as a passivated guidance order.

8. The device according to claim 7,
**characterized in that** said passivation means (5) comprise a first set (8) being provided with a voter (9) and being formed so as:
- to compare each one of said main guidance orders with the auxiliary guidance order; and
- to select, as a passivated guidance order, the main guidance order being the closest to the auxiliary guidance order.

9. The device according to claim 7,
**characterized in that** said passivation means (5) comprise a second set (16) being provided with at least one passivation element (17, 18, 19) and being formed so as:
- to compare to the auxiliary guidance order, each one of said main guidance orders, one of which is selected as a privileged guidance order; and
- to select, as a passivated guidance order, the privileged guidance order as long as it remains the closest to the auxiliary guidance order, within one tolerance value, and otherwise, a passivation value depending on the other main, not privileged, guidance order.

10. The device according to claim 9,
**characterized in that** it further comprises at least one filter for filtering the passivated guidance order, so as to obtain a continuous value being transmitted to the flight control system (4).

11. A system for guiding an aircraft, said guiding system (2) comprising at least one calculation stage (3) for guidance orders, being intended to a flight control system (4) of the aircraft,
**characterized in that** it comprises moreover a passivation device (1) for guidance orders, such as specified in any one of claims 7 to 10.

12. An aircraft,
**characterized in that** it further comprises a device (1) such as specified in any one of claims 7 to 10.

13. An aircraft,
**characterized in that** it comprises a guidance system (2) such as specified in claim 11.
